# FASCICULE DE BREVET EUROPEEN

(11) **EP 2 907 690 B1**
(45) Date de publication et mention de la délivrance du brevet: **12.04.2017**
(21) Numéro de dépôt: 15154305.5
(22) Date de dépôt: 09.02.2015
(51) Int. Cl.: B60M 1/34, B61B 9/00, B60L 5/42, B60L 5/40, B60M 1/36

(54) **Support de piste d'un système d'alimentation électrique par le sol pour un véhicule terrestre, rail comportant un tel support et procédé d'implantation**
Laufbahnunterlage für ein elektrisches Stromversorgungssystem über den Boden für Landfahrzeug, Schiene, die eine solche Unterlage umfasst, und Verlegeverfahren
Track support of a ground-based electricity supply system for a land vehicle, rail comprising such a support and installation method

(30) Priorité: 10.02.2014 FR 1451009
(43) Date de publication de la demande: 19.08.2015
(73) Titulaire: ALSTOM Transport Technologies, 93400 Saint-Ouen (FR)
(72) Inventeur: Duprat, Patrick, 93340 LE RAINCY (FR)
(74) Mandataire: Lavoix

(56) Documents cités:
- EP-A1- 2 088 025
- DE-C- 50 285
- FR-A1- 2 938 800
- US-A- 606 968
- FICAT T ET AL: "APS: l'Alimentation Par le Sol, une solution rénovatrice pour les tramways", REVUE GENERALE DES CHEMINS DE FER, CENTRALE DES REVUES DUNOD-GAUTHIER-VILLARS. PARIS, FR, vol. 182, 1 avril 2009 (2009-04-01), pages 25-40, XP001525028, ISSN: 0035-3183

## Description

L'invention a pour domaine celui des systèmes d'alimentation électrique par le sol d'un véhicule de transport terrestre, notamment un tramway.

Plus particulièrement, l'invention est relative à un support de piste du type support de piste d'un système d'alimentation électrique par le sol pour un véhicule terrestre, notamment un tramway, sous forme d'un profilé en un matériau isolant électrique, comprenant : une surface supérieure sensiblement plane, munie d'une gorge longitudinale destinée à recevoir un segment de piste, et d'une rainure longitudinale destinée à recevoir un câble d'alimentation électrique basse tension ; et une surface inférieure destinée à prendre appui sur un socle de maintien du support dans la chaussée.

Un système d'alimentation électrique par le sol est constitué d'une pluralité de rails connectés longitudinalement les uns aux autres par l'intermédiaire de boîtiers de jonction.

Chaque rail comporte un support de piste d'alimentation électrique et une piste d'alimentation électrique, qui est constituée par une pluralité de segments conducteurs séparés longitudinalement les uns aux autres par des segments isolants.

Le document FR 2 938 800 décrit un support de piste prenant la forme d'un profilé alvéolé en fibres de verre, comprenant une face supérieure, sensiblement plane, munie d'une gorge longitudinale unique destinée à recevoir les segments de la piste, et une face inférieure plane, destinée à prendre appui sur le sol. Le profilé comporte une âme reliant la face supérieure à la face inférieure qui est munie d'au moins un conduit d'alimentation longitudinale, propre à recevoir une ligne d'alimentation basse haute tension destinée à être connectée aux segments conducteurs pour les porter à un potentiel adapté aux besoins du véhicule. La gorge et le conduit d'alimentation d'un profilé sont disposés de manière centrale et symétrique par rapport à un plan médian longitudinal du support, perpendiculaire à la face supérieure de celui-ci.

Pour le cas d'un tramway, un tel support est d'environ 11 m de long.

Le procédé d'implantation d'un tel support consiste à réaliser une tranchée dans la chaussée à équiper d'un tel système d'alimentation par le sol. Une fois la tranchée déblayée, un radier en béton est coulé, pour former une surface plane au fond de la tranchée. Les supports de pistes sont ensuite disposés sur des selles métalliques fixées au radier. Puis, une longrine ferraillée est coulée au-dessous et sur les côtés du support de piste afin de garantir son ancrage dans la chaussée.

Les supports sont raccordés mécaniquement deux à deux par un boîtier de jonction constitué essentiellement par une paire d'éclisses, de part et d'autre de l'axe longitudinal des supports et un capot métallique obturant, par le dessus, le boîtier de jonction.

Le câble d'alimentation est placé dans le conduit central des supports et raccordé à un segment conducteur. Enfin les différents segments isolants et conducteurs sont fixés dans la gorge du profilé.

Les segments isolants sont fixés par collage tandis que les segments conducteurs sont fixés par collage et vissage sur un support.

Un tel support présente différents problèmes.

Un premier problème est lié à la maintenance du système. En cas d'accident d'exploitation ou tout simplement en cas d'usure des différents composants d'un rail, il est nécessaire de remplacer ce composant.

S'il s'agit de remplacer un segment, en particulier un segment conducteur, celui-ci étant fixé par collage et vissage au support, la désolidarisation du segment du support conduit souvent à la dégradation du support lui-même.

Le remplacement du support est extrêmement complexe. Il s'agit de casser la longrine en béton de manière à dégager les selles de fixation du support à remplacer. Puis, il s'agit de reprendre les différentes étapes d'implantation mentionnées ci-dessus pour installer le nouveau support.

Une telle opération de maintenance prend nécessairement énormément de temps (environ 1 mois). On comprendra que, lorsqu'il s'agit d'effectuer une opération de maintenance à un croisement routier fréquenté, au coeur d'une ville par exemple, il est donc nécessaire de réduire le temps d'intervention.

Un second problème réside dans la robustesse du support. Il s'avère à la pratique qu'un profilé alvéolé et en fibres de verre présente une résistance mécanique insuffisante.

Un troisième problème est lié à la réalisation de courbes.

Dans une version monobloc du support de piste, celui-ci peut être légèrement cintré de manière à présenter un rayon de courbure supérieur ou égal à 95 m. Un support monobloc ne peut être cintré davantage.

Cependant, un tel support doit être cintré en usine puis approvisionné sur le lieu d'implantation.

Pour réaliser des courbes présentant un rayon de courbure plus faible, une version multibloc du support présenté ci-dessus a été proposée. Selon cette version, l'âme du support est subdivisée en trois sections plus étroites, selon deux plans de coupe parallèle au plan médian du support. Chaque section du support peut être cintrée avec un rayon de courbures inférieur à 95 m pour obtenir des rayons de courbure aussi petits que le rayon de braquage du véhicule utilisant le système d'alimentation. Pour un tramway, le rayon de braquage est d'environ 18 mètres.

Cependant ces trois sections du support doivent être cintrées en usine et fixées ensemble également en usine, avant que le support ainsi réalisé ne soit approvisionné sur le lieu d'implantation.

On comprend les difficultés logistiques rencontrées lors de l'implantation d'un tel support.

L'invention a donc pour but de pallier ces problèmes en proposant notamment un support propre à être désolidarisé facilement se son socle en béton et qui présente une robustesse accrue.

L'invention a pour objet un support de piste du type précité, caractérisé en ce que la surface inférieure est courbe, de préférence en forme de « V », de sorte que le support est bombé de manière à être maintenu, au moins transversalement, dans un évidement de forme complémentaire réalisé dans le socle de maintien du support dans la chaussée.

Selon des aspects avantageux mais non obligatoire de l'invention, un tel support peut incorporer une ou plusieurs des caractéristiques suivantes, prises dans toute combinaison techniquement admissible :
- la surface inférieure du support est crénelée selon une direction longitudinale du profilé que constitue le support de manière à être maintenu, au moins longitudinalement, dans l'évidement de forme complémentaire réalisé dans le socle.
- la surface inférieure comprend des redans transversaux participant au maintien en position du support dans l'évidement.
- le support est venu de matière, et en ce que le support est en un matériau élastomère, de sorte que le support est déformable élastiquement.
- bords latéraux du support, connectant la surface inférieure et la surface supérieure, sont munis de trous traversants pour l'insertion de goujons permettant une fixation directe du support dans le socle.
- un fond de la gorge est en communication avec la rainure, et des rebords du fond de la gorge, situés de part et d'autre de la rainure sont munis d'évidements pour loger les moyens de fixation d'un segment sur ledit support.
- chaque paroi latérale de la rainure comporte un passage latéral débouchant dans un évidement associé du fond de la gorge, afin de permettre la mise en place d'un lardon au fond dudit évidement pour recevoir par vissage un boulon permettant la fixation d'un segment sur ledit support.
- la surface supérieure comporte des faces latérales, disposées de part et d'autre de la gorge, chacune des faces étant inclinée de manière à présenter un angle de dévers b par rapport à un plan horizontal, l'angle de dévers valant entre 0 et 4°, notamment 2°.
- chaque face latérale de la surface supérieure du support comporte un dessin favorisant l'écoulement de l'eau, et l'adhérence au support.
- chaque bord latéral du support est muni d'un canal s'étendant longitudinalement à travers le support et connectant entre elles les deux faces transversales d'extrémité du support, ledit canal étant destiné à recevoir un câble d'antenne.
- le support présente une longueur réduite et la rainure constitue une cavité, chaque face transversale d'extrémité étant munie d'un orifice débouchant dans la cavité propre à recevoir l'extrémité d'un tube d'amenée d'un câble d'alimentation basse tension et/ou d'un câble d'antenne.
- chaque bord latéral du support étant muni d'un canal s'étendant à angle de manière à connecter une face latérale transversale d'extrémité du support à une paroi latérale de la rainure pour la circulation d'un câble d'antenne.

L'invention a également pour objet un procédé d'implantation d'un support conforme au support précédent, caractérisé en ce qu'il comporte les étapes consistant à : déblayer une tranchée dans une chaussée ; couler un radier en béton ; au moyen d'un gabarit, positionner le support, le support étant muni de chevilles d'ancrage placées dans les trous traversants dont sont munis les bords latéraux du support, le support étant éventuellement contraint pour lui conférer un rayon de courbure adapté ; couler un socle en béton sensiblement jusqu'à la hauteur de la face supérieure du support ; fixer par vissage, à travers les trous traversants, le support au socle de maintien du support dans la chaussée.

L'invention a également pour objet un rail d'un système d'alimentation par le sol, caractérisé en ce qu'il comporte une pluralité de support disposé bout à bout sur un socle en béton de maintien desdits supports dans la chaussée, chaque support étant un support conforme au support précédent, et une pluralité de segments conducteurs et isolants, deux segments conducteurs successifs étant séparés l'un de l'autre par au moins un segment isolant, les segments formant ensemble la piste et étant reçus dans les gorges des supports.

De préférence, deux supports successifs sont solidarisés l'un à l'autre au moyen d'une feuille de jonction conformée de manière à présenter une forme complémentaire de celle des surfaces inférieures des supports à connecter et propre à éviter d'éventuelles fuites électriques

L'invention a également pour objet un procédé d'implantation d'un rail conforme au rail précédent, caractérisé en ce qu'il comporte les étapes consistant à : déblayer une tranchée dans une chaussée ; couler un radier en béton ; au moyen de gabarit, positionner les différents supports constitutifs d'une section de rail et le tube d'amenée des câbles d'antenne et d'alimentation basse tension, les supports étant munis de chevilles d'ancrage placées dans les trous traversants dont sont munis les bords latéraux de chaque support, les supports étant éventuellement contraints pour leur conférer un rayon de courbure adapté ; couler un socle en béton sensiblement jusqu'à la hauteur de la face supérieure des supports ; faire circuler le câble d'antenne dans les canaux des supports et raccorder le câble d'alimentation basse tension au segment conducteur de la section de rail ; fixer par boulonnage les segments conducteurs et les segments isolants de la piste de la section de rail dans les gorges des différents supports.

L'invention et d'autres avantages de celle-ci apparaitront plus clairement à la lumière de la description qui va suivre d'un mode de réalisation d'un support conforme à son principe, donnée uniquement à titre d'exemple et faite en référence aux dessins annexés dans lesquels :
- La figure 1 est une représentation en perspective éclatée des différents éléments constitutifs d'une section de rail d'un système d'alimentation électrique par le sol pour un tramway ;
- La figure 2 est une vue en perspective en plongée d'un support intermédiaire de la section de rail de la figure 1 ;
- La figure 3 est une vue en perspective en contre-plongée du support de la figure 2 ;
- La figure 4 est une vue partielle de dessus du support intermédiaire des figures 2 et 3 :
- La figure 5 est une section dans un plan transversal du support intermédiaire des figures 2 et 3 ;
- La figure 6 est une vue en perspective en plongée d'un support de jonction entre deux sections de rail ;
- La figure 7 est une coupe selon un plan médian du support de jonction de la figure 6 ;
- La figure 8 est une coupe selon un plan transversal du support de jonction de la figure 6 ;
- La figure 9 est une vue en contre-plongée d'un support de jonction entre les extrémités de deux supports intermédiaires et d'un tube d'amenée des câbles d'antenne et d'alimentation basse tension ;
- La figure 10 est une vue en perspective d'une feuille de jonction entre deux supports intermédiaires d'une section de rail de la figure 1 ; et,
- La figure 11 est un logigramme d'un procédé d'implantation du système d'alimentation par le sol dans une chaussée.

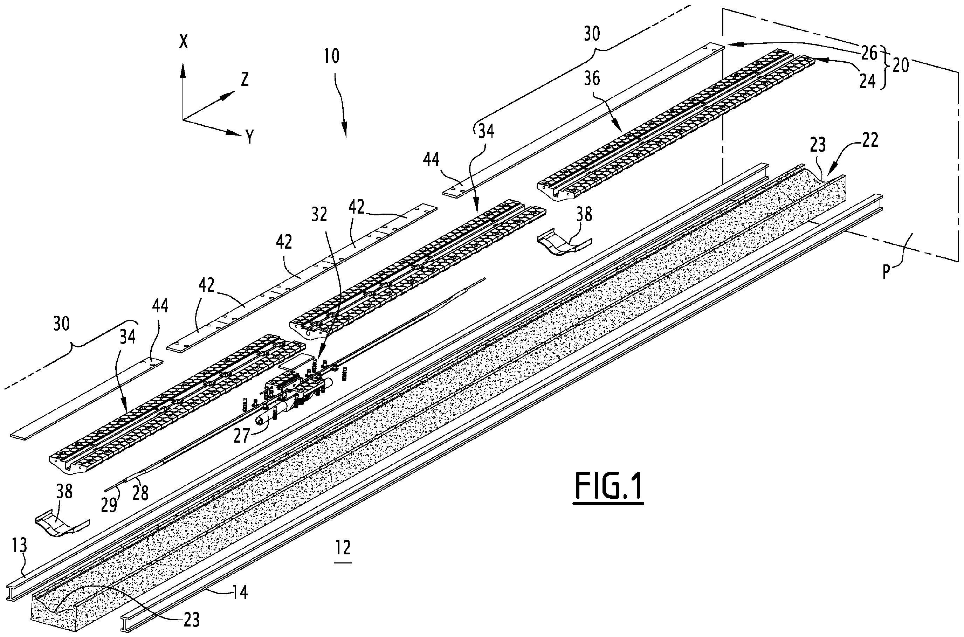

En se référant à la figure 1, un système d'alimentation électrique par le sol 10 est destiné à être implanté dans une chaussée 12 entre les deux rails 13 et 14 de roulement du tramway.

Le système 10 comporte un rail 20 maintenu en position dans la chaussée 12 par un socle 22.

Le système 10 comporte également un moyen d'alimentation basse tension et un moyen de détection d'un tramway.

Un rail 20 est constitué par un support de piste 24 et une piste 26. La piste 26 est logée dans une gorge du support de piste 24.

Le support de piste 24 est réalisé par l'assemblage selon une direction longitudinal Z de plusieurs sections de support de piste 30 par l'intermédiaire d'un support de jonction 32.

Une telle section de support de piste est représentée sur la figure 1. Une section de piste est elle-même composée de plusieurs supports intermédiaires. Dans le mode de réalisation représenté sur la figure 1, une section de support de piste 30 comporte successivement un premier support intermédiaire d'extrémité 34, un premier support intermédiaire central 36, un second support intermédiaire central 36, un second support intermédiaire d'extrémité 34. Pour des raisons de clarté, sur la figure 1, seule une première moitié de la section de support de piste 30 est représentée, la seconde moitié de la section de support de piste 30 étant symétrique à la première par rapport à un plan transversal P.

La piste 26 est réalisée par l'assemblage, selon la direction longitudinale Z, d'une pluralité de segments comportant des segments conducteurs 44 et, entre deux segments conducteurs successifs, des segments isolants 42.

Comme cela est illustré sur la figure 1, un segment isolant 42 recouvre un support de jonction 32 et la portion d'extrémité adjacente des deux supports intermédiaires d'extrémité 34 reliés par ce support de jonction. Un segment conducteur 44 recouvre la portion, qui n'est pas recouverte par le segment isolant 42, de chaque support intermédiaire d'extrémité 34 d'une section de support, ainsi que les premier et second supports intermédiaires centraux 36.

Un segment isolant 42 est constitué en un matériau isolant du courant électrique, tandis qu'un segment conducteur 44 est constitué en un matériau métallique conducteur du courant électrique.

Les segments présentent une forme de plaque parallélépipédique d'épaisseur e et de largeur l, faibles devant leur longueur L.

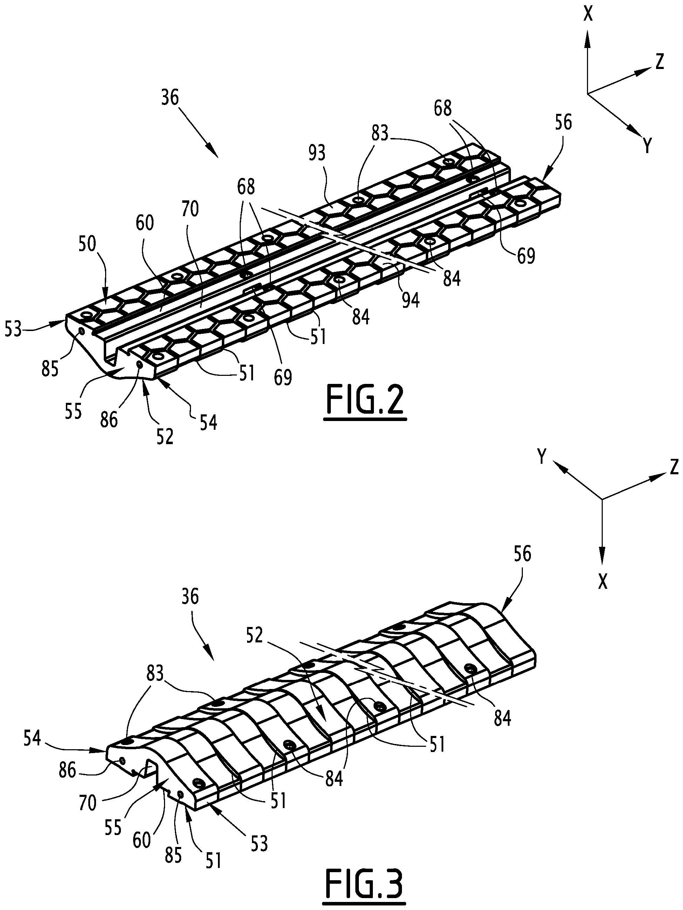

En se référant maintenant aux figures 2 à 5, un support intermédiaire central 36 va être décrit en détails.

Le support 36 est un profilé plein s'étendant selon l'axe longitudinal Z.

Le support 36 est réalisé en un matériau élastomère à base de caoutchouc naturel ou synthétique, tel que de l'EPDM (selon l'acronyme «éthylène-propylène-diène monomère »). De cette manière le support 36 présente une certaine élasticité. En particulier, le support 36 peut être déformé élastiquement par application d'un effort adapté, de manière à conférer un rayon de courbure prédéterminé au support 36 lors de la réalisation d'un rail courbe.

Un tel matériau élastomère présente également une grande résistance aux chocs, et une bonne isolation électrique.

Sans contraintes, le support 36 est symétrique par rapport à un plan médian XZ, l'axe X étant destiné à être disposé sensiblement verticalement lorsque le support 36 est implanté dans la chaussée 12.

Le support 36 comporte une surface supérieure 50, une surface inférieure 52, des bords latéraux 53 et 54, connectant entre elles les surfaces supérieure et inférieure. Le support 36 comporte également des faces transversales d'extrémité 55 et 56.

Alors que la surface supérieure 50 est sensiblement plane et est destinée à être disposée dans un plan sensiblement horizontal lorsque le support 36 est implanté, la surface inférieure 52 est, en section transversale, courbe de manière à ce que le support soit bombé vers l'extérieur et puisse être reçu et maintenu transversalement dans un évidement de forme conjuguée ménagé dans le socle 22.

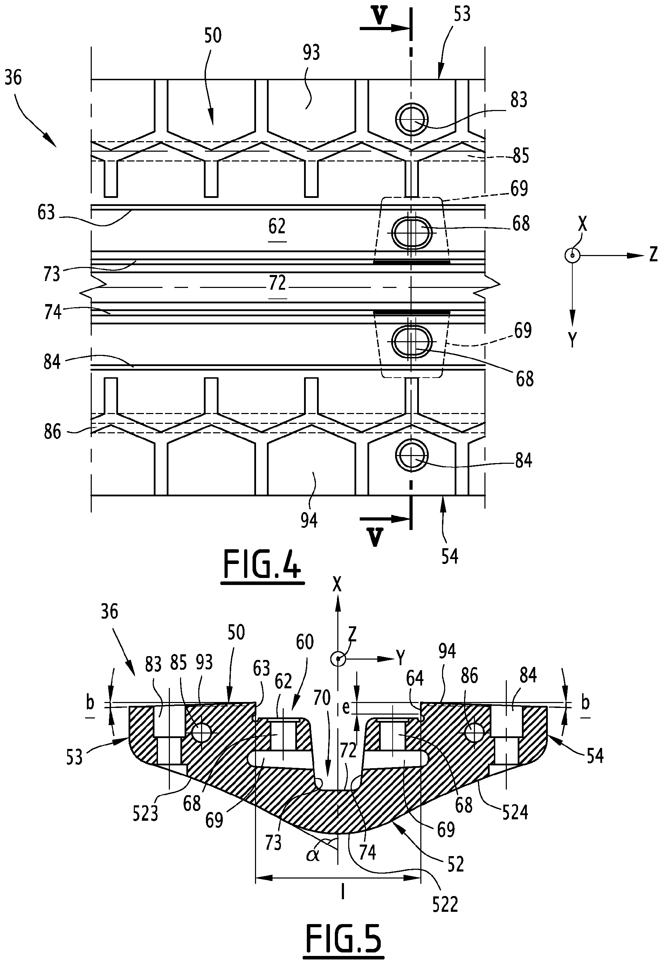

De préférence, la surface inférieure 52 présente une forme en « V ». Plus précisément, selon une section transversale (représentée à la figure 5), au voisinage du plan médian XZ, la surface inférieure 52 présente une section centrale 522 en arc de cercle qui se prolonge vers le bord latéral 53, respectivement 54, par une section latérale 523, respectivement 524, sensiblement rectiligne. Le demi-angle α d'ouverture du « V » de la surface inférieure 52 est important, entre 70 et 80°.

Une telle forme de la surface inférieure 52 permet une bonne répartition des efforts. Elle permet également que le support soit facilement retiré de son logement dans le socle 22.

En variante, la section centrale de la surface inférieure 52 est plus étendue et l'angle α plus faible, le support devenant alors plus trapézoïdal, voir rectangulaire. Cependant, une telle forme nécessite l'utilisation d'une plus grande quantité de matériau pour la réalisation du support, qui présente par conséquent un coût plus important. De plus, plus l'angle α est faible, plus il est difficile d'extraire le support hors du socle, ce qui complique les opérations de maintenance.

L'épaisseur du support 36 diminue donc du plan médian XZ vers chaque bord latéral 53, 54.

Longitudinalement, la surface inférieure 52 est crénelée. Les redans 51 transversaux ainsi formés dans la surface 52 participent au maintien en position du support 36 dans un évidement conjugué 23 réalisé dans le socle 22.

La surface supérieure 50 est munie d'une gorge 60, longitudinale et centrale, comportant un fond 62 et des parois latérales respectivement 63 et 64.

Les dimensions de la gorge 60 sont adaptées à celles d'un segment, de manière à recevoir de manière ajustée un tel segment de piste. Plus précisément, la largeur de la gorge correspond à la largeur l d'un segment, et la profondeur de la gorge correspond à l'épaisseur e d'un segment. De ce fait, en position, un segment est affleurant à la surface supérieure 50 du support sur lequel il est fixé.

Le support 36 comporte une rainure 70, longitudinale et centrale, qui débouche sur le fond 62 de la gorge.

La rainure 70 comporte un fond 72 et des parois latérales respectivement 73 et 74.

La rainure 70 débouche sur les faces transversales d'extrémité du support 36.

La rainure 70 est destinée à permettre la circulation d'un câble d'alimentation basse tension, appartenant au moyen d'alimentation du système, depuis une face transversale d'extrémité du support 36 jusqu'à un point de raccordement mécanique et électrique au segment conducteur 44 reçu dans la gorge 60 du support 36.

Un segment reçu dans la gorge 60 est fixé au support 36 uniquement par un ensemble boulon-écrou (non représenté sur les figures). Pour la réception de tels moyens de fixation, le support 36 comporte, sur le fond 62 de la gorge 60, de part et d'autre de de la rainure 70, et régulièrement espacé longitudinalement, un évidement 68. L'évidement 68 s'étend parallèle à l'axe X. Il présente, dans un plan orthogonal à l'axe X une section en ellipse, dont le grand axe est orienté selon l'axe Z.

Au droit d'un évidement 68, la paroi latérale 73, respectivement 74, du conduit 70 comporte un passage 69 s'étendant sensiblement selon l'axe Y et débouchant au fond de l'évidement 68 correspondant. Le passage 69 présente également une forme oblongue selon l'axe longitudinal. Un tel passage permet la mise en place d'un lardon au fond de l'évidement 68. Un boulon inséré dans une entretoise à travers un trou adapté dont est muni le segment à fixer et inséré dans l'évidement 68 pour être associé, par vissage, au lardon préalablement positionné au fond de cet évidement 68.

Un bord latéral 53, respectivement 54, est muni, régulièrement espacés longitudinalement, de trous traversants 83, respectivement 84. Un trou 83, 84, connecte la surface supérieure 50 du support 36 à la surface inférieure 52 de celui-ci. Un trou 83, 84, présente un épaulement interne.

Un trou 83, 84 est propre à recevoir un goujon de fixation par vissage du support 36 dans le socle 22 de maintien du support dans la chaussée 12. La tête du goujon vient prendre appui sur l'épaulement du trou 83, 84, pour maintenir le support 36 solidaire du socle 22.

Chaque bord latéral 53, respectivement 54, comporte également un canal 85, respectivement 86, s'étendant longitudinalement et débouchant sur les faces transversales d'extrémité 55, 56 du support 36. Un tel canal est destiné à recevoir un câble d'antenne appartenant aux moyens de détection de la présence d'un tramway.

La surface supérieure 50 du support 36, présente de chaque côté de la gorge 60, des faces latérales 93 et 94.

Une face latérale 93, 94 présente, dans un plan transversal, un angle de dévers b par rapport à un plan horizontal, de sorte que ladite face latérale est inclinée, du plan médian XZ, vers le bord latéral 53, 54 correspondant. L'angle de dévers b est par exemple de 2°. Ceci favorise l'écoulement de l'eau de pluie sur le rail.

De plus, chaque face latérale 93, 94, présente un dessin en relief. Ceci permet d'améliorer encore l'écoulement de l'eau et d'augmenter le coefficient de friction entre le support et la roue d'un véhicule roulant sur le rail, afin de favoriser l'adhérence.

Le support 36 venant d'être décrit est un support intermédiaire central. Une description similaire pourrait être faite d'un support intermédiaire d'extrémité 34. La seule différence entre ces deux types de supports intermédiaires réside dans le fait que sur une première portion du support 34, la rainure 70 présente une première largeur, tandis que sur une seconde portion du support 34, la rainure 70 présente une seconde largeur, la première largeur étant inférieure à la seconde largeur, la seconde largeur étant égale à celle de la rainure 70 d'un support intermédiaire central 36. La première portion du support 34 correspond à la portion devant être recouverte par un segment isolant 42, la seconde portion du support 34 correspondant à la portion devant être recouverte par un segment conducteur 44. La première largeur est sensiblement égale au diamètre du câble d'alimentation basse tension de manière à la pincer légèrement pour le maintenir en position. La seconde largeur permet de loger des moyens de raccordement mécanique et électrique du câble d'alimentation au segment conducteur 44.

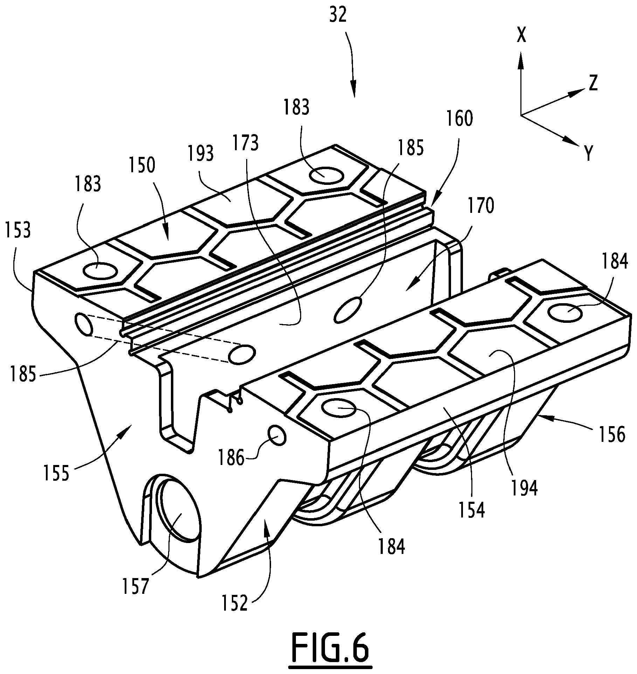

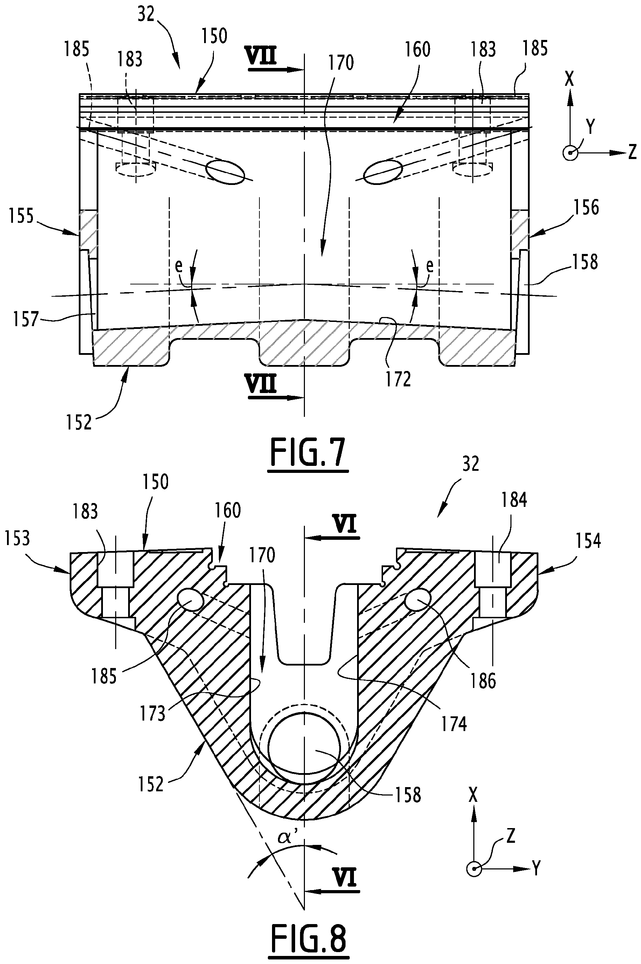

Aux figures 6 à 9, un support de jonction 32 entre deux sections de support de piste est représenté.

Un support de jonction constitue une variante de réalisation d'un support intermédiaire, tel que le support 36 décrit précédemment en détail. En conséquence, un élément du support de jonction 32 similaire à un élément du support décrit aux figures 2 à 5 est identifié par le même chiffre de référence augmenté d'une centaine.

Le support de jonction 32 comporte ainsi une surface supérieure 150.

Le support de jonction 32 comporte une surface inférieure 152 de forme générale en « V ». L'épaisseur du support de jonction 32 est supérieure à celle du support 36. Puisqu'ils présentent la même largeur, le demi-angle α d'ouverture du « V » du support 32 est réduit. La surface inférieure 152 est crénelée avec un pas identique à celui des supports intermédiaires.

Le support de jonction 32 comporte des bords latéraux 153 et 154, connectant les surfaces supérieure 150 et inférieure 152, et des faces transversales d'extrémité 155 et 156.

Le support de jonction 32 présente une longueur réduite.

La surface supérieure 150 est munie d'une gorge centrale 160 et d'une rainure 170 au fond de la gorge 160.

Dans cette variante de réalisation, les dimensions de la rainure 170 sont telles que celle-ci définie une cavité à l'intérieur de l'élément de jonction 32.

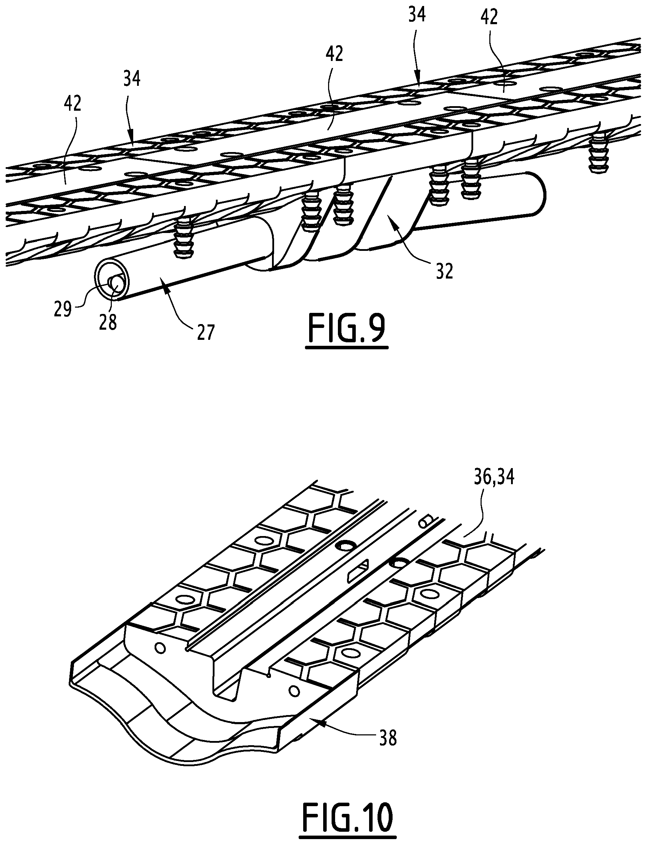

Chaque face transversale d'extrémité 155, respectivement 156 du support de jonction 32 est munie d'un orifice circulaire 157, respectivement 158, débouchant dans la rainure 170. L'axe de l'orifice 157, 158, est légèrement incliné par rapport à l'axe X, d'un angle e. Cet orifice est destiné à recevoir l'extrémité d'un tube d'amenée 27 des câbles d'alimentation basse tension 28 et d'antenne 29, comme cela est représenté assemblé sur la figure 9. Le câble d'alimentation basse tension est donc introduit dans le support au niveau d'un support de jonction 32, puis circule du support de jonction, à travers la rainure 70 des supports intermédiaires d'extrémité et central pour finalement être connecté au segment conducteur de la piste.

Chaque paroi d'extrémité 155, 156, du support de jonction 32 comporte une échancrure dont le contour correspond à la section transversale du conduit 70 d'un support intermédiaire voisin. Cette échancrure permet de faire passer le câble d'alimentation électrique de la cavité du support de jonction 32 directement dans le conduit 70 du support intermédiaire voisin 34.

Chaque bord latéral 153, 154, est muni de trous traversants 183, 184, permettant la fixation du support de jonction directement dans le socle 22 en béton, au moyen de goujons.

Chaque bord latéral est muni d'un canal d'antenne 185, respectivement 186. Cependant, le canal d'antenne 185, 186, forme un angle sensiblement à 45° par rapport au plan médian XZ de manière à connecter une face transversale d'extrémité 155 ou 156 à une paroi latérale 173 ou 173 du conduit 170. Un câble d'antenne forme une boucle associée à une section de support 30. Ainsi, le câble d'antenne introduit dans le support 24 au niveau d'un premier support de jonction 32, circule dans le canal 185 du premier support de jonction, dans le canal 83 des supports intermédiaires définissant la section de support 30, puis dans le canal 183 d'un second support de jonction ; puis revient en circulant dans un canal 184 du second support de jonction, dans le canal 84 des supports intermédiaires définissant la section de support 30, puis dans le canal 184 du premier support de jonction pour repasser dans la rainure 170 de celui-ci. Le câble d'antenne forme ainsi une boucle d'induction permettant la détection de la présence d'un tramway à l'aplomb de la section de support 30. Cela permet de commander la sous-station d'alimentation du segment conducteur associé à cette section du support au moment du passage d'un tramway.

A la figure 10 est représentée une feuille de connexion 38 entre deux supports intermédiaires consécutifs 36 et 34. La feuille 38 est souple et de faible épaisseur. Elle est réalisée en un matériau élastomère. Elle sert de barrière empêchant d'éventuelles fuites électriques dans le sol. La feuille 38 est conformée pour présenter une face supérieure conjuguée de la surface inférieure 52 des supports intermédiaires à connecter. En particulier, la surface supérieure de la feuille 38 comporte des créneaux complémentaires de ceux des extrémités des supports intermédiaires à connecter. Chaque support intermédiaire est fixé par collage à la feuille 38. Les redans du créneau central de la surface supérieure de la feuille prennent appui respectivement sur un redan du créneau d'extrémité d'un support et sur le redan du créneau d'extrémité de l'autre support, de manière à les appliquer longitudinalement l'un contre l'autre.

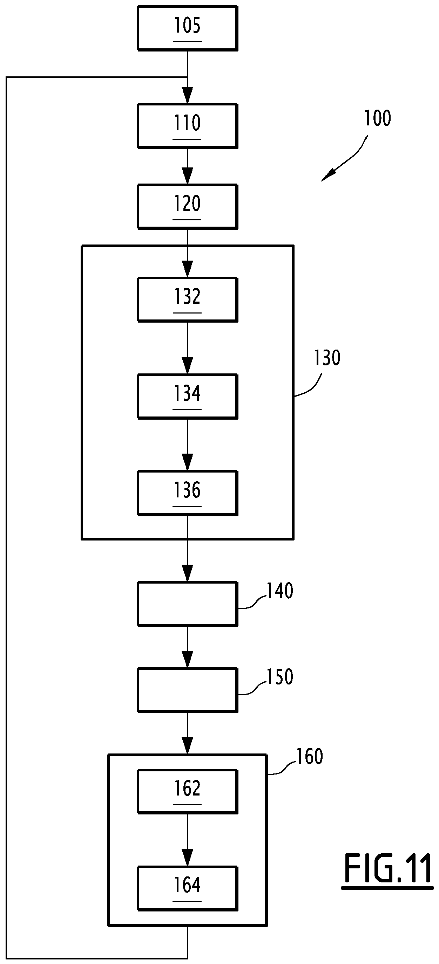

Le procédé d'implantation 100 d'un système d'alimentation par le sol dans une chaussée va maintenant être présenté à l'aide de la figure 11.

Dans une étape 105, réalisée au préalable en usine, une section de support de piste 30 est réalisée en associant les différents supports intermédiaires 34 et 36 au moyen de feuilles de jonction 38. Chaque feuille 38 est collée aux extrémités de deux supports intermédiaires voisins. La section 30 ainsi réalisée est approvisonnée sur le chantier.

Dans une étape 110, une tranchée est déblayée sur la chaussée 12.

Dans l'étape suivante 120, pour niveler le fond de la tranchée, un radier en béton est coulé. La dalle de voie et les rails de roulements sont positionnés sur ce radier dans le cas d'un système ferroviaire

Puis, à l'étape 130, au moyen d'un gabarit spécifiquement adapté à cet effet, la section du support 30 est pré-positionnée au-dessus du radier.

Il est à noter que lors du pré-positionnement d'un support, le gabarit est propre à appliquer un effort adapté permettant de cintrer le support de manière à lui conférer un rayon de courbure correspondant à un profil requis. Le gabarit permet également un positionnement précis du support selon les axes X, Y et Z et propre à exercer un effort adapté permettant de résister à la pression du béton ou du matériau utilisé pour réaliser le socle.

Dans une sous-étape 132, le premier support de jonction est positionné.

La section 30 est placée en continuité de l'extrémité de la section de support.

Dans une sous-étape 134, le tube d'amenée des câbles d'antenne et d'alimentation électrique est tiré jusqu'au premier support de jonction et connecté à ce dernier. Le câble d'alimentation est passé à travers le premier support de jonction, dans la rainure des supports intermédiaires de la section 30, puis tiré pour que son extrémité atteigne le point de connexion au segment conducteur.

Le câble d'antenne est passé, à l'aller, à travers le premier support de jonction, les supports intermédiaires et le second support de jonction de la section 30, puis, au retour, à travers le second support de jonction, les supports intermédiaires de la section 30 et le premier support de jonction, de manière à former une boucle.

Il est à noter que des chevilles sont prépositionnées sur la surface inférieure 52 et 152 des supports, en continuité des trous traversants 83, 84, 183, 184.

Puis, à l'étape 140, un béton adapté est coulé entre le radier et les supports de manière à former le socle 22 de maintien du support dans la chaussée. Le béton est coulé dans un coffrage (fixe ou glissant), jusqu'à ce qu'il atteigne soit le niveau de la surface supérieure des supports soit le niveau bas des bords 53, 54, 153, 154. Le prépositionnement des supports permet, au moment où le béton est coulé, de réserver par moulage un évidement dans le socle 22. Cet évidement a une forme complémentaire de celle de la surface inférieure 52, 152 des supports, éventuellement cintrés.

Une fois le béton pris, à l'étape 150, des goujons sont vissés à travers les trous traversants des supports. Ces goujons engagent les chevilles maintenant ancrées dans le béton du socle 22. La mise en pression du goujon sur l'épaulement d'un trou traversant permet la solidarisation du support sur le socle.

A l'étape 160, la piste est réalisée.

Dans une sous-étape 162, l'extrémité du câble d'alimentation électrique basse tension circulant dans la rainure des supports est connectée mécaniquement et électriquement au segment conducteur.

Dans une sous-étape 164, les segments sont placés dans les gorges des supports, puis fixés par boulonnage.

Le procédé est alors itéré pour la section suivante.

En variante, l'opération de tirage et de connexion des câbles, d'alimentation électrique ou antenne, est réalisée, non pas à chaque itération, mais après l'installation des supports avant la mise en place des segments formant la piste.

L'homme du métier constatera que la maintenance d'un tel système d'alimentation électrique par le sol est extrêmement simple.

S'il s'agit de remplacer un segment de piste détérioré, il suffit de dévisser les boulons du segment à remplacer, puis de le sortir de la gorge. Le segment n'étant pas collé au support, le fait de désolidariser le segment ne détériore pas le support. Celui-ci peut donc recevoir un segment de remplacement, qui est fixé sur le support, en lieu et place du segment détérioré, comme indiqué ci-dessus dans l'étape correspondante du procédé d'implantation.

S'il s'agit de remplacer un support détérioré, il suffit de dévisser les goujons correspondants pour désolidariser le support du socle. Le support est ensuite désengagé à force de l'évidement en forme de berceau réalisé dans le socle. Puis un nouveau support est mis en place. La forme crénelée de la surface inférieure d'un support étant standard, le support de remplacement est reçu dans l'évidement du socle. Lorsque le support détérioré présente un rayon de courbure, le support de remplacement est déformé transversalement pour pouvoir l'insérer à force dans l'évidement réalisé, de manière à le conformer au rayon de courbure de l'évidement. Une fois le support de remplacement inséré dans l'évidement, ce dernier contraint le support de telle sorte que le support conserve le rayon de courbure qui lui a été conféré.

Les goujons sont alors remis en place pour solidariser le support au socle. Les segments de piste sont ensuite remis en place.

Dans la présente demande, on entend par véhicule terrestre, tout véhicule concourant au transport terrestre, guidé sur pneus ou sur fer, de passagers ou de fret.

On entend notamment par transport terrestre guidé sur fer, tout transport de type ferroviaire, de type urbain, par exemple tramway, de type suburbain, par exemple métro, de type banlieue, de type régional ou de type grandes vitesses, très grandes vitesses.

On entend notamment par transport terrestre guidé sur pneus, tout transport terrestre utilisant des pneumatiques, par exemple de type métro pneumatique, tramway pneumatique, ou encore tout type de transport terrestre associé aux routes électriques de type bus électrique, camions électriques, ou voitures électriques.

## Revendications

1. Support de piste (32, 34, 36) d'un système d'alimentation électrique par le sol (10) pour un véhicule terrestre, notamment un tramway, sous forme d'un profilé en un matériau isolant électrique, comprenant :
- une surface supérieure (50, 150) sensiblement plane, munie d'une gorge (60, 160) longitudinale destinée à recevoir un segment de piste (42, 44), et d'une rainure (70, 170) longitudinale destinée à recevoir un câble d'alimentation électrique basse tension (28); et,
- une surface inférieure (52, 152) destinée à prendre appui sur un socle (22) de maintien du support dans la chaussée, **caractérisé en ce que** la surface inférieure (52, 152) est courbe, de préférence en forme de « V », de sorte que le support est bombé de manière à être maintenu, au moins transversalement, dans un évidement (23) de forme complémentaire réalisé dans le socle (22) de maintien du support dans la chaussée.

2. Support de piste selon la revendication 1, **caractérisé en ce que** la surface inférieure (52, 152) du support est crénelée selon une direction longitudinale du profilé que constitue le support de manière à être maintenu, au moins longitudinalement, dans l'évidement (23) de forme complémentaire réalisé dans le socle (22).

3. Support de piste selon l'une quelconque des revendications précédentes, **caractérisé en ce que** la surface inférieure (52, 152) comprend des redans (51) transversaux participant au maintien en position du support (36) dans l'évidement (23).

4. Support de piste selon l'une quelconque des revendications précédentes, **caractérisé en ce que** le support est venu de matière, et **en ce que** le support est en un matériau élastomère, de sorte que le support est déformable élastiquement.

5. Support de piste selon l'une quelconque des revendications 1 à 4, dans lequel des bords latéraux (53, 54, 153, 154) du support, connectant la surface inférieure et la surface supérieure, sont munis de trous traversants (83, 84, 183, 184) pour l'insertion de goujons permettant une fixation directe du support dans le socle (22).

6. Support de piste selon l'une quelconque des revendications 1 à 5, dans lequel, un fond de la gorge (60, 160) est en communication avec la rainure (70, 170), et des rebords du fond de la gorge, situés de part et d'autre de la rainure sont munis d'évidements (68) pour loger les moyens de fixation d'un segment sur ledit support.

7. Support de piste selon la revendication 6, dans lequel chaque paroi latérale de la rainure (70, 170) comporte un passage (69) latéral débouchant dans un évidement (68) associé du fond de la gorge, afin de permettre la mise en place d'un lardon au fond dudit évidement pour recevoir par vissage un boulon permettant la fixation d'un segment sur ledit support.

8. Support de piste selon l'une quelconque des revendications 1 à 7, dans lequel la surface supérieure (50, 150) comporte des faces latérales (93, 94, 193, 194), disposées de part et d'autre de la gorge (60, 160), chacune des faces étant inclinée de manière à présenter un angle de dévers b par rapport à un plan horizontal, l'angle de dévers valant entre 0 et 4°, notamment 2°.

9. Support de piste selon la revendication 8, dans lequel chaque face latérale (93, 94, 193, 194) de la surface supérieure (50, 150) du support comporte un dessin favorisant l'écoulement de l'eau, et l'adhérence au support.

10. Support de piste selon l'une quelconque des revendications précédentes, dans lequel chaque bord latéral (53, 54) du support est muni d'un canal (85, 86) s'étendant longitudinalement à travers le support et connectant entre elles les deux faces transversales d'extrémité (55, 56) du support, ledit canal étant destiné à recevoir un câble d'antenne (29).

11. Support (32) de piste selon l'une quelconque des revendications 1 à 9, présentant une longueur réduite et dans lequel la rainure (170) constitue une cavité, chaque face transversale d'extrémité (155, 156) étant munie d'un orifice (157, 158) débouchant dans la cavité propre à recevoir l'extrémité d'un tube d'amenée d'un câble d'alimentation basse tension et/ou d'un câble d'antenne.

12. Support de piste selon la revendication 11, dans lequel chaque bord latéral (153, 154) du support étant muni d'un canal (185, 186) s'étendant à angle de manière à connecter une face latérale transversale d'extrémité du support à une paroi latérale de la rainure (170) pour la circulation d'un câble d'antenne.

13. Procédé d'implantation d'un support conforme à l'une quelconque des revendications précédentes, **caractérisé en ce qu'**il comporte les étapes consistant à :
- déblayer une tranchée dans une chaussée ;
- couler un radier en béton ;
- au moyen d'un gabarit, positionner le support (32, 34, 36), le support étant muni de chevilles d'ancrage placées dans les trous traversants dont sont munis les bords latéraux du support, le support étant éventuellement contraint pour lui conférer un rayon de courbure adapté ;
- couler un socle en béton sensiblement jusqu'à la hauteur de la face supérieure du support ;
- fixer par vissage, à travers les trous traversants, le support au socle (22) de maintien du support dans la chaussée.

14. Rail (20) d'un système d'alimentation par le sol (10), **caractérisé en ce qu'**il comporte une pluralité de support (32, 34, 36) disposé bout à bout sur un socle (22) en béton de maintien desdits supports dans la chaussée (12), chaque support étant un support conforme à l'une quelconque des revendications 1 à 12, et une pluralité de segments conducteurs (44) et isolants, deux segments conducteurs successifs étant séparés l'un de l'autre par au moins un segment isolant (42), les segments formant ensemble la piste (26) et étant reçus dans les gorges (60, 160) des supports.

15. Rail selon la revendication 14, dans lequel deux supports (36, 34) successifs sont solidarisés l'un à l'autre au moyen d'une feuille de jonction (38) conformée de manière à présenter une forme complémentaire de celle des surfaces inférieures des supports à connecter et propre à éviter d'éventuelles fuites électriques

16. Procédé d'implantation d'un rail (20) conforme à la revendication 14 ou à la revendication 15, **caractérisé en ce qu'**il comporte les étapes consistant à :
- déblayer une tranchée dans une chaussée ;
- couler un radier en béton ;
- au moyen de gabarit, positionner les différents supports (32, 34, 36) constitutifs d'une section de rail et le tube d'amenée des câbles d'antenne et d'alimentation basse tension, les supports étant munis de chevilles d'ancrage placées dans les trous traversants dont sont munis les bords latéraux de chaque support, les supports étant éventuellement contraints pour leur conférer un rayon de courbure adapté ;
- couler un socle en béton sensiblement jusqu'à la hauteur de la face supérieure des supports ;
- faire circuler le câble d'antenne dans les canaux des supports et raccorder le câble d'alimentation basse tension au segment conducteur de la section de rail ;
- fixer par boulonnage les segments conducteurs et les segments isolants de la piste de la section de rail dans les gorges des différents supports.

## Patentansprüche

1. Fahrspurträger (32, 34, 36) für ein System zur Stromversorgung eines Bodenfahrzeugs, insbesondere einer Straßenbahn, über den Boden (10), der die Form eines Profils aus einem elektrisch isolierenden Material hat und der Folgendes umfasst:
- eine im Wesentlichen ebene obere Oberfläche (50, 150), die mit einer longitudinalen Kehle (60, 160), die dazu bestimmt ist, ein Fahrspursegment (42, 44) aufzunehmen, und mit einer longitudinalen Rinne (70, 170), die dazu bestimmt ist, ein Niederspannungs-Stromversorgungskabel (28) aufzunehmen, versehen ist; und
- eine untere Oberfläche (52, 152), die dazu bestimmt ist, sich auf einem Haltesockel (22) des Trägers in der Fahrbahn abzustützen, **dadurch gekennzeichnet, dass** die untere Oberfläche (52, 152) vorzugsweise "V"-förmig gekrümmt ist, derart, dass der Träger gewölbt ist, so dass er zumindest transversal in einer Aussparung (23) mit komplementärer Form gehalten wird, die in dem Haltesockel (22) für den Träger in der Fahrbahn verwirklicht ist.

2. Fahrspurträger nach Anspruch 1, **dadurch gekennzeichnet, dass** die untere Oberfläche (52, 152) des Trägers in Längsrichtung des Profils, das der Träger bildet, gezahnt ist, derart, dass sie wenigstens in Längsrichtung in der Aussparung (23) mit komplementärer Form, die in dem Sockel (22) verwirklicht ist, gehalten wird.

3. Fahrspurträger nach einem der vorhergehenden Ansprüche, **dadurch gekennzeichnet, dass** die untere Oberfläche (52, 152) transversale Hindernisse (51) aufweist, die zum Halten des Trägers (26) an seiner Position in der Aussparung (23) beitragen.

4. Fahrspurträger nach einem der vorhergehenden Ansprüche, **dadurch gekennzeichnet, dass** der Träger einteilig ausgebildet ist und dass der Träger aus einem Elastomermaterial besteht, derart, dass der Träger elastisch verformbar ist.

5. Fahrspurträger nach einem der Ansprüche 1 bis 4, wobei die Seitenkanten (53, 54, 153, 154) des Trägers, die die untere Oberfläche und die obere Oberfläche verbinden, mit Durchgangslöchern (83, 84, 183, 184) versehen sind, um Dübel einzusetzen, die eine direkte Befestigung des Trägers in dem Sockel (22) ermöglichen.

6. Fahrspurträger nach einem der Ansprüche 1 bis 5, wobei ein Boden der Kehle (60, 160) mit der Rinne (70, 170) in Kommunikation ist und Ränder des Bodens der Kehle, die sich beiderseits der Rinne befinden, mit Aussparungen (68) versehen sind, um Mittel für die Befestigung eines Segments an dem Träger aufzunehmen.

7. Fahrspurträger nach Anspruch 6, wobei jede Seitenwand der Rinne (70, 170) einen seitlichen Durchlass (69) aufweist, der in eine Aussparung (68) mündet, die dem Boden der Kehle zugeordnet ist, um die Anordnung einer Leiste auf dem Boden der Aussparung zu ermöglichen, um durch Schrauben einen Bolzen aufzunehmen, der die Befestigung eines Segments auf dem Träger ermöglicht.

8. Fahrspurträger nach einem der Ansprüche 1 bis 7, wobei die obere Oberfläche (50, 150) Seitenflächen (93, 94, 193, 194) umfasst, die beiderseits der Kehle (60, 160) angeordnet sind, wobei jede der Flächen in der Weise geneigt ist, dass sie einen Überhöhungswinkel b in Bezug auf eine horizontale Ebene aufweist, wobei der Überhöhungswinkel im Bereich von 0 bis 4° liegt und insbesondere 2° beträgt.

9. Fahrspurträger nach Anspruch 8, wobei jede Seitenfläche (93, 94, 193, 194) der oberen Oberfläche (50, 150) des Trägers ein Muster aufweist, das das Ablaufen von Wasser und die Haftung an dem Träger begünstigt.

10. Fahrspurträger nach einem der vorhergehenden Ansprüche, wobei jede Seitenkante (53, 54) des Trägers mit einem Kanal (85, 86) versehen ist, der in Längsrichtung über dem Träger verläuft und die zwei transversalen Stirnflächen (55, 56) des Trägers miteinander verbindet, wobei der Kanal dazu bestimmt ist, ein Antennenkabel (29) aufzunehmen.

11. Fahrspurträger (32) nach einem der Ansprüche 1 bis 9, der eine verringerte Länge aufweist und in dem die Rinne (170) einen Hohlraum bildet, wobei jede transversale Stirnfläche (155, 156) mit einer Öffnung (157, 158) versehen ist, die in den eigentlichen Hohlraum mündet und die das Ende eines Rohrs für die Zuführung eines Niederspannungsversorgungskabels und/oder eines Antennenkabels aufnehmen kann.

12. Fahrspurträger nach Anspruch 11, wobei jede Seitenkante (153, 154) des Trägers mit einem Kanal (185, 186) versehen ist, der sich unter einem Winkel erstreckt, derart, dass eine transversale Stirnseitenfläche des Trägers mit einer Seitenwand der Rinne (170) für die Verlegung eines Antennenkabels verbunden ist.

13. Verfahren zum Einbau eines Trägers nach einem der vorhergehenden Ansprüche, **dadurch gekennzeichnet, dass** es die Schritte umfasst, die darin bestehen:
- einen Graben in einer Fahrbahn auszuheben;
- eine Fundamentplatte aus Beton zu gießen;
- mittels einer Schablone den Träger (32, 34, 36) zu positionieren, wobei der Träger mit Verankerungszapfen versehen ist, die in den Durchgangslöchern angeordnet werden, mit denen die Seitenkanten des Trägers versehen sind, wobei der Träger eventuell eingespannt wird, um ihm einen geeigneten Krümmungsradius zu verleihen;
- einen Sockel aus Beton im Wesentlichen bis auf die Höhe der oberen Fläche des Trägers zu gießen;
- den Träger an dem Sockel (22) durch die Durchgangslöcher durch Verschrauben zu befestigen, um den Träger in der Fahrbahn zu halten.

14. Schiene (20) eines Systems für die Versorgung über den Boden (10), **dadurch gekennzeichnet, dass** sie mehrere Träger (32, 34, 36) umfasst, die aneinander anstoßend auf einem Sockel (22) aus Beton zum Halten der Träger in der Fahrbahn (12) angeordnet sind, wobei jeder Träger ein Träger nach einem der Ansprüche 1 bis 12 ist, und mehrere leitende (44) und isolierende Segmente umfasst, wobei zwei aufeinander folgende leitende Segmente voneinander durch wenigstens ein isolierendes Segment (42) getrennt sind, wobei die Segmente zusammen die Fahrspur (26) bilden und in den Kehlen (60, 160) der Träger aufgenommen sind.

15. Schiene nach Anspruch 14, wobei zwei aufeinander folgende Träger (36, 34) mittels einer Verbindungslage (38) aneinander befestigt sind, die so beschaffen ist, dass sie eine Form aufweist, die zu jener der unteren Oberflächen der zu verbindenden Träger komplementär ist, und eventuelle Leckströme vermeiden kann.

16. Verfahren zum Einbauen einer Schiene (20) nach Anspruch 14 oder Anspruch 15, **dadurch gekennzeichnet, dass** es die Schritte umfasst, die darin bestehen:
- einen Graben in einer Fahrbahn auszuheben;
- eine Fundamentplatte aus Beton zu gießen;
- mittels einer Schablone die verschiedenen Träger (32, 34, 36), die einen Schienenabschnitt bilden, und das Rohr für die Zuführung von Antennen- und Niederspannungsversorgungskabeln zu positionieren, wobei die Träger mit Verankerungszapfen versehen sind, die in den Durchgangslöchern angeordnet sind, mit denen die Seitenkanten jedes Trägers versehen sind, wobei die Träger eventuell eingespannt werden, um ihnen einen geeigneten Krümmungsradius zu verleihen;
- einen Sockel aus Beton im Wesentlichen bis auf die Höhe der oberen Fläche der Träger zu gießen;
- das Antennenkabel in den Kanälen der Träger zu verlegen und das Niederspannungsversorgungskabel mit dem leitenden Segment des Abschnitts der Schiene zu verbinden;
- die leitenden Segmente und die isolierenden Segmente der Fahrspur des Abschnitts der Schiene in den Kehlen der verschiedenen Träger durch Bolzen zu befestigen.

## Claims

1. A track support (32, 34, 36) of an electric power system (10) at ground level for a land vehicle, notably a tramway, as a profile made of an electrically insulating material, comprising:
- a substantially planar upper surface (50, 150), provided with a longitudinal flute (60, 160) intended for receiving a track segment (42, 44), and with a longitudinal groove (70, 170) intended for receiving a low voltage electric power supply cable (28); and,
- a lower surface (52, 152) intended to bear upon a base (22) for maintaining the support in the roadway, **characterized in that** the lower surface (52, 152) is curved, preferably V-shaped, so that the support is convex so as to be at least transversely maintained in a recess (23) with a mating shape made in the base (22) for maintaining the support in the roadway.

2. The track support according to claim 1, **characterized in that** the lower surface (52, 152) of the support is crenellated along a longitudinal direction of the profile formed by the support, so as to be at least longitudinally maintained in the recess (23) with a mating shape made in the base (22).

3. The track support according to any of the preceding claims, **characterized in that** the lower surface (52, 152) comprises transverse offsets (51) participating in maintaining the support (36) in position in the recess (23).

4. The track support according to any of the preceding claims, **characterized in that** the support is made in one piece of material and **in that** the support is in an elastomeric material so that the support is elastically deformable.

5. The track support according to any of claims 1 to 4, wherein lateral edges (53, 54, 153, 154) of the support, connecting the lower face and the upper face, are provided with through-holes (83, 84, 183, 184) for inserting pins allowing direct attachment of the support in the base (22).

6. The track support according to any of claims 1 to 5, wherein, a bottom of the flute (60, 160) is in communication with the groove (70, 170), and edges of the bottom of the flute, located on either side of the groove, are provided with recesses (68) for accommodating the means for attaching a segment on said support.

7. The track support according to claim 6, wherein each sidewall of the groove (70, 170) includes a lateral passage (69) opening into an associated recess (68) of the bottom of the groove, in order to allow the setting into place of a gib at the bottom of said recess for receiving by screwing a bolt allowing a segment to be attached on said support.

8. The track support according to any of claims 1 to 7, wherein the upper surface (50, 150) includes lateral faces (93, 94, 193, 194), positioned on either side of the flute (60, 160), each of the faces being tilted so as to have a tilt angle b with respect to a horizontal plane, the tilt angle having a value between 0 and 4°, notably 2°.

9. The track support according to claim 8, wherein each lateral face (93, 94, 193, 194) of the upper surface (50, 150) of the support includes a pattern promoting flow of water, and adherence to the support.

10. The track support according to any of the preceding claims, wherein each lateral edge (53, 54) of the support is provided with a channel (85, 86) extending longitudinally through the support and a connecting both transverse end faces (55, 56) of the support to each other, said channel being intended for receiving an antenna cable (29).

11. The track support (32) according to any of claims 1 to 9, having a reduced length, and wherein the groove (170) forms a cavity, each transverse end face (155, 156) being provided with an orifice (157, 158) opening into the cavity able to receive the end of a tube for bringing a low-voltage power supply cable and/or an antenna cable.

12. The track support according to claim 11, wherein each lateral edge (153, 154) of the support is provided with a channel (185, 186) extending with an angle so as to connect a transverse lateral end face of the support to a sidewall of the groove (170) for circulation of an antenna cable.

13. A method of installation of a support according to any of the preceding claims, **characterized in that** it includes the steps of:
- clearing a trench in a roadway;
- casting a concrete apron;
- by means of a template, positioning the support (32, 34, 36), the support being provided with anchoring dowel pins placed in the through-holes, with which the lateral edges of the support are provided, the support being optionally stressed in order to give it a suitable radius of curvature;
- casting a concrete base substantially up to the height of the upper face of the support;
- attaching by screwing, through the through-holes, the support to the base (22) for maintaining the support in the roadway.

14. A rail (20) of a electric power system at ground level (10), **characterized in that** it includes a plurality of supports (32, 34, 36) positioned end-to-end on a concrete base (22) for maintaining said supports in the roadway (12), each support being a support according to any of claims 1 to 12, and a plurality of conductive and insulating segments (44), two successive conductive segments being separated from each other by at least one insulating segment (42), the segments forming together the track (26) and being received into the flutes (60, 160) of the supports.

15. The rail according to claim 14, wherein two successive supports (36, 34) are secured to each other by means of a junction sheet (38) shaped so as to have a shape mating that of the lower surfaces of the supports to be connected and be able to avoid possible electric leakages.

16. A method of installation of a rail (20) according to claim 14 or to claim 15, **characterized in that** it includes the steps of:
- clearing a trench in a roadway;
- casting a concrete apron;
- by means of a template, positioning the different constitutive supports (32, 34, 36) of a rail section and the tube for bringing the antenna and low-voltage power supply cables, the support being provided with anchoring dowel pins placed in the through-holes, with which the lateral edges of each support are provided, the supports being optionally stressed in order to give them a suitable radius of curvature;
- casting a concrete base substantially up to the height of the upper face of the supports;
- having the antenna cable circulate in the channels of the supports and connecting the low-voltage power supply cable to the conductive segments of the rail section;
- attaching by bolting the conductive segments and the insulating segments of the track section in the flutes of the different supports.
